# EUROPEAN PATENT SPECIFICATION

(11) **EP 1 288 111 B1**
(45) Date of publication and mention of the grant of the patent: **06.09.2006**
(21) Application number: 00979680.6
(22) Date of filing: 24.11.2000
(51) Int. Cl.: B62D 33/02

(54) **IMPROVED POLE FOR TRUCK STAKES**
VERBESSERTE STECKRUNGE FÜR KRAFTFAHRZEUGAUFBAU
POTEAU PERFECTIONNE POUR RIDELLES DE CAMIONS

(30) Priority: 25.11.1999 ES 9902995 U
(43) Date of publication of application: 05.03.2003
(73) Proprietor: Mecadetol, S.A., 31006 Pamplona (Navarra) (ES)
(72) Inventor: REBOLLO, Ignacio, E-31006 Pamplona (Navarra) (ES)
(74) Representative: Baker, Karen Veronica
(86) International application number: PCT/ES2000/000453
(87) International publication number: WO 2001/038139

(56) References cited:
- WO-A-83/01420
- WO-A-92/00867
- ES-T- 2 034 450
- ES-U- 1 023 675
- ES-U- 1 028 094

## Description

The disposition of poles is known in connection with the side stakes, used for the loading platform of trucks, with the purpose of forming an appropriate adaptation for the different necessities according to the use.

The mentioned poles can be fixed, incorporating an installation anchoring which requires the disassembly when, because of charging needs or for any other reason, the poles need to be moved away, which has the inconvenience that the disassembly and installation of the poles into its installation is difficult.

Some other realizations of mobile poles are also known, which are situated incorporated in a movable assembly along the truck loading body, which allows to move then away from their position without having to disassemble them, being it necessary in this case to incorporate anchoring means so as to fix each pole in its corresponding place.

In the conventional solutions, the anchoring means incorporated in this kind of mobile poles have a series of inconveniences, such as the difficulty to actuate them, the complexity of the set due to a great number of components and inadequate stops of the actuating element, which suffers blows at its external part which produces the deterioration of its surface treatment.

Other known solutions, as the ones of ES-U-1028094 that forms the closest prior art according to the preamble of claim 1, EP 0 334 387 and WO-A-9200867, disclose poles which are incorporated into their installations by means of an anchoring device actuated in looking and unlocking position by means of an operating lever. The structure of these solutions is complex and requires some really specific particulars so as to be efficient with a simple assembly.

According to the present invention a pole is pressed carried out according to some constructive and functional features which make it particularly advantageous, eliminating the previously mentioned inconveniences of the already known poles which can be applied in a mobile way.

This pole, object of the invention, includes anchoring means which are made up of a structural housing, in which a mobile wedge is included by means of an actuating lever against some recovery springs, having moreover incorporated some pivoting arms which surpass the length of the set, being the structural housing made up of an only part defined by progressive stamping from a basic plate, determining an extreme hinging ripple for the articulation of the pivoting arms, some punched lugs for the articulated assembly of the actuating lever, some guides to conduct the mobile wedge in a sliding way, some stop lugs to limit the backward movement of the mentioned mobile wedge and some adjusting bosses for the positioning of the anchoring means between the pivoting arms.

This way a structurally simple device is obtained, which is easy to be installed and with which the blocking and unblocking of the corresponding pole in its installation site is operatively actionable without any difficulty, without suffering the actuating lever blows which deteriorate its outer part.

Moreover, thanks to the pivoting arms a pivoting bearing support of the pole is reached, easing up the positioning regarding the installation anchoring.

In view of all this, the mentioned pole, object of the invention, certainly has some very advantageous features, acquiring own life and preferable character as compared to the poles which are presently known for the same function.
Figure 1 shows a schematic view of the truck loading platform foreseen of the preconized kind of pole.
Figures 2 and 3 are both details in amplified representation of the lower part of the pole corresponding to the previous figure, respectively in blocked position and in liberated position with respect to the installation anchoring.
Figure 4 is a front view of the pole with the anchoring means which are situated at the inner part, represented by means of dashes in closed position.
Figure 5 is a sectioned side view of the pole, observing the anchoring means in open position.

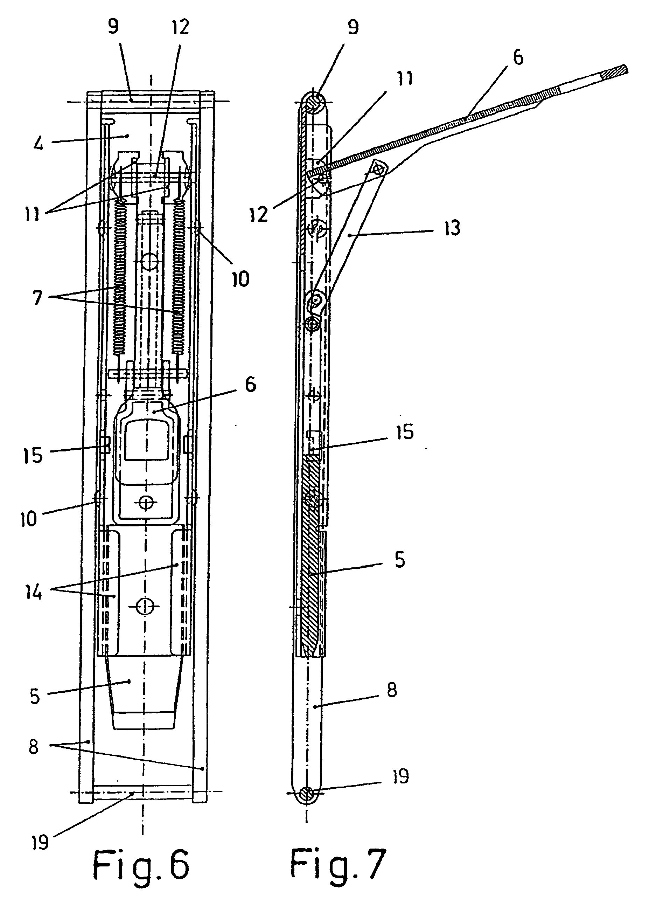

Figure 6 is a front view of the anchoring means alone and at greater scale in closed position.
Figure 7 is a sectioned side view of the anchoring means themselves in open position.

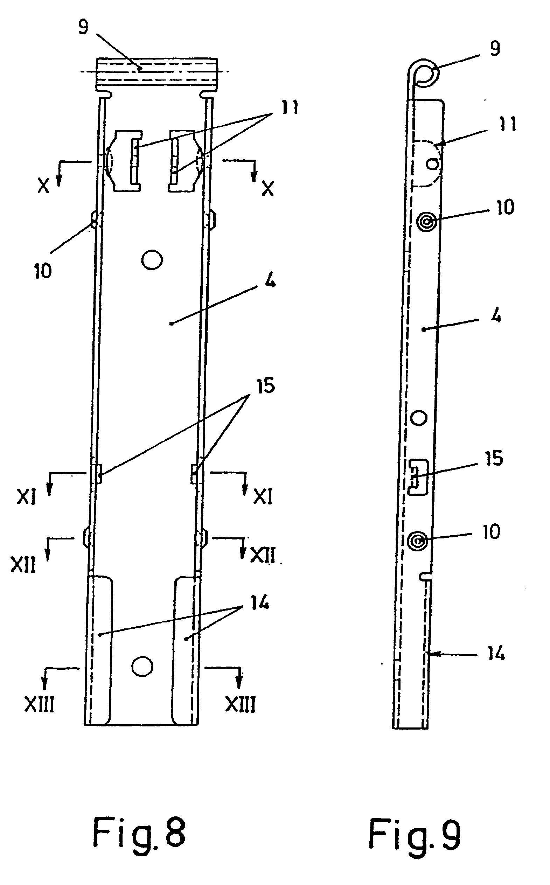

Figures 8 and 9 are both corresponding front and profile views of the structural housing of the anchoring means.

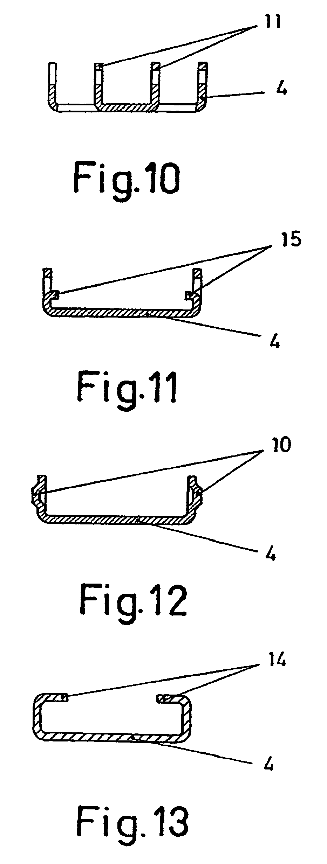

Figures 10, 11, 12 and 13 are respective view in transversal section of the device housing, according to the indications X-X, XI-XI, XII-XII and XIII-XIII indicated on figure 8.

The object of the invention refers to a pole of the ones incorporated in relation to the stakes of the truck loading platform (1), concretely of the mobile type and which can be fastened in a fixed position by means of anchoring actuating means.

The pole is made up of a structure (2), which can be situated in hanging assembly with the possibility to slide longitudinally along an upper guide (3), incorporating situated at the lower part of the mentioned structure (2) the anchoring means to fix it in the corresponding place.

The anchoring means include a structural housing (4), respect of which a functional set is incorporated to the mentioned device, which consists in a mobile wedge (5), which can be moved by means of an actuating lever (6), against the action of some recovering springs (7), having moreover some arms (8) in pivoting assembly which surpass the lower part of the rest of the devices.

The structural housing (4) is made up of a single-piece part, made up by means of progressive stamping from a basic plate.

At the end that corresponds to the upper part, the mentioned structural housing (4) determines a loop (9), regarding which the arm pivoting articulation (8) is established in hinged assembly, remaining these freely turnable respect to the mentioned hinging.

At the sides of the housing (4) itself some bosses (10) are moreover determined which are defined by the inlaying towards the outside, by means of which an adjustment of the positioning of the anchoring means is established between the mentioned pivoting arms (8), for the perfect situation of the mobile wedge (5) faced to the housing of the corresponding fitting.

On the other hand, by means of stamping and perpendicular lowering some faced lugs (11) are made up in the core of the mentioned housing (4). These lugs are foreseen of both corresponding punchings, regarding which the articulated assembly of the actuating lever (6) is established by means of a shaft (12). The mentioned lever is related by means of a connecting rod (13) to the mobile wedge (5).

At the lower end the sides of the housing (4) are made up with some loops (14) turned towards the inside, which determine some guides between which the mobile wedge (5) is housed in sliding assembly.

Moreover, by stamping and lowering towards the inside, at the sides of the housing (4) itself some lugs (15) are defined, by means of which a stop of the mobile wedge (5) loop is established towards the back, so that the movement remains limited in this sense, not allowing the actuating lever (6) to overturn completely.

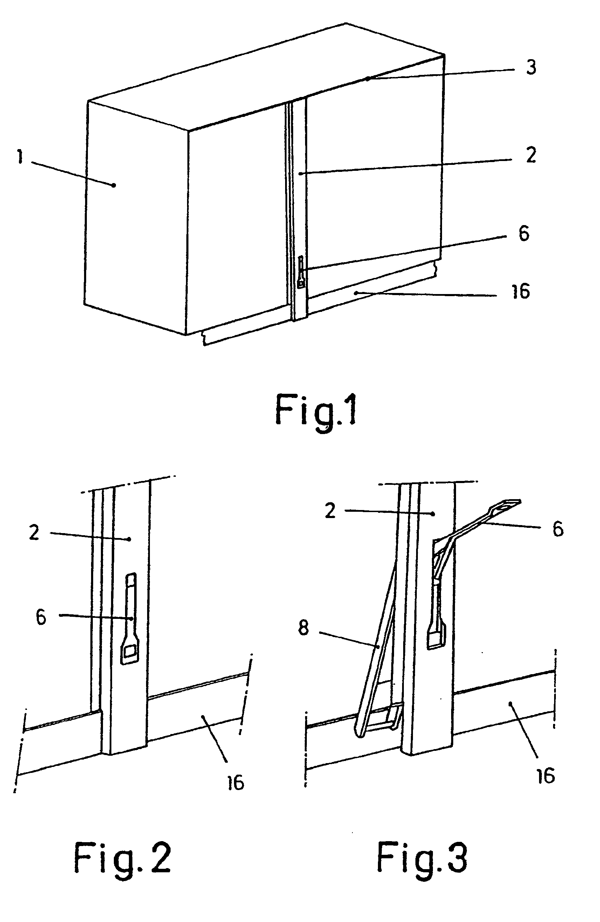

With all this, by means of the pivoting arms (8) which stand out longitudinally downward regarding the anchoring means, a support can be carried out at the corresponding place to fix the pole, as it is represented on figure 3, serving as an aid to take the device to the correct position given by the bosses (10) to establish the anchoring with respect to the housing (16) of the corresponding loading platform (1).

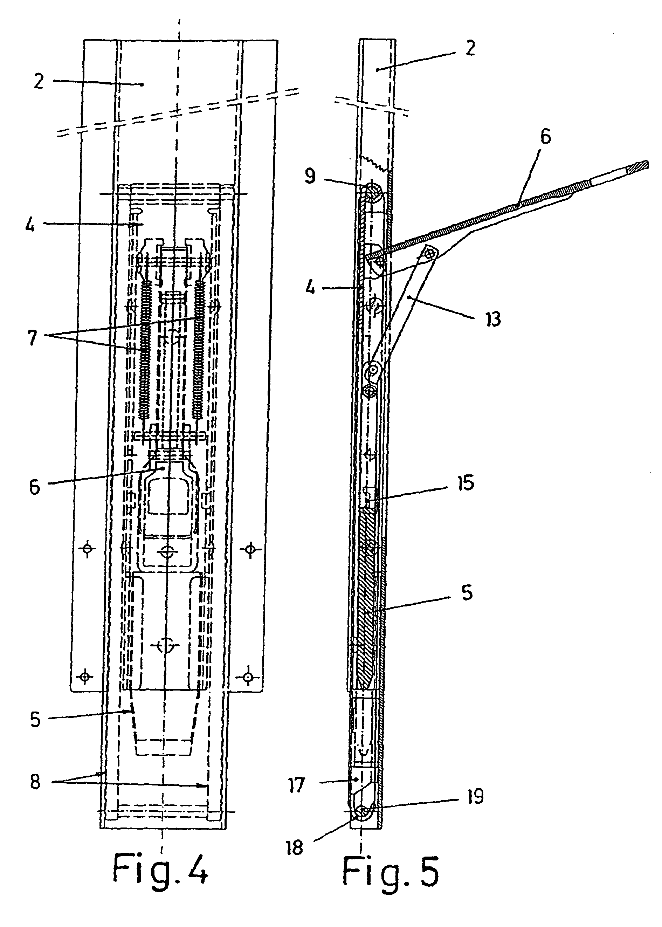

The mentioned anchoring is established regarding a part (17) fixedly situated in the housing (16) of the loading platform (1), which part (17) determines a lower seat (18) in which the outer structure (19) of the pivoting arms (8) is supported, configuring moreover the body of the mentioned part (17) a housing regarding which the end of the mobile wedge (5) can be introduced in its downward moved position , as it can be appreciated on figure 5.

The anchoring for the fastening of the pole at the place where it is to be situated, is carried out knocking down the actuating lever (6), which by means of the connecting rod (13) moves the wedge (5) downward, introducing its end in the part (17) in the way of a latch, with which the anchoring remains perfectly assured.

From this position the lever (6) can be tilted upward, in which case the connecting rod (13) moves the wedge (5) up, which then leaves the part (17), remaining the anchoring unblocked. The wedge loop (5) upwards remains limited by the stop determined by the lugs (15), which limit in turn the turning of the lever (6) elevation, avoiding it to hit the pole structure (1) with its external face, avoiding thus the deterioration of the external surface treatment.

## Claims

1. Improved pole for truck stakes of the oneS which incorporate an anchoring device which includes a structural housing (4), respect to which some pivoting arms (8) are articulated, including a guiding assembly inside the mentioned housing (4), a mobile wedge (5), which can be moved by means of an operating lever (6), to lock and unlock respect to an anchoring (17), in which the pivoting arms (8) are supported in an articulated way, **characterized in that** the structural frame (4) determines at one end a structure made up of a loop (9), respect to which the pivoting arms (8) are hingedly articulated; while at the sides the mentioned housing (4) has some arrangements (10) defined towards the outside, respect to which a positioning adjustment of the device is established between the pivoting arms (8) to centre the mobile wedge (5); determining the housing (4) itself at an extreme area of the sides some loops (14) towards the inside, by means of which the guiding of the mobile wedge (5) is established; while from the core of the mentioned structural housing (4) towards the inside some lungs (11) come out, the latter are defined by cuttings of the same, between which the actuating lever (6) is established in articulated assembly; remaining defined by cutting and lowering towards the inside at the sides of the structural housing (4) some lugs (15) which determine a stop of the movement towards the back of the mobile wedge (5).

2. Improved pole for truck stakes, according to the first claim, **characterized in that** the hinge arrangement for the pivoting arm articulation (8) remains defined by the loop (9) determined at an end of the structural housing (4).

3. Improved pole for truck stakes, according to the first claim, **characterized in that** the positioning adjustment arrangements of the device between the pivoting arms (8), to situate the mobile wedge (5) centred regarding the fitting housing in the chassis, consist in arrangements (10) defined towards the outside at the sides of the structural housing (4).

4. Improved pole for truck stakes, according to the first claim, **characterized in that** the guiding arrangements of the mobile wedge (5) consist in some foldings (14) turned towards the inside, made up at an extreme area from the sides of the structural housing (4).

5. Improved pole for truck stakes, according to the first claim, **characterized in that** the arrangements of the articulated assembly of the actuating lever (6) consist in some faced and perforated lugs (11), defined by cutting and perpendicular lowering towards the inside in the core of the structural housing (4).

6. Improved pole for truck stakes, according to the first claim, **characterized in that** the stop arrangements towards the back of the mobile wedge (5) consist in some lugs (15) defined by cuttings and lowering towards the inside at the sides of the structural housing (4).

## Patentansprüche

1. Verbesserter Pfosten für Lkw-Rungen der Art, die eine Verankerungsvorrichtung aufweist, die ein Strukturgehäuse (4) beinhaltet, in Bezug auf das einige Schwenkarme (8) angelenkt sind, mit einer Führungsbaugruppe innerhalb des genannten Gehäuses (4), einem beweglichen Keil (5), der mit einem Betätigungshebel (6) bewegt werden kann, um eine Verankerung (17) zu ver- und entriegeln, in der die Schwenkarme (8) auf eine gelenkige Weise getragen werden, **dadurch gekennzeichnet, dass** der Strukturrahmen (4) an einem Ende eine Struktur bestimmt, die aus einer Schlaufe (9) besteht, in Bezug auf die die Schwenkarme (8) klappbar angelenkt sind; während das genannte Gehäuse (4) an den Seiten einige Anordnungen (10) aufweist, die zur Außenseite hin definiert sind, in Bezug auf die eine Positionsjustage der Vorrichtung zwischen den Schwenkarmen (8) und der Mitte des beweglichen Keils (5) erfolgt; Bestimmen des Gehäuses (4) selbst an einem äußersten Bereich der Seiten einige Schlaufen (14) zur Innenseite hin, mit denen die Führung des beweglichen Keils (5) erzielt wird; während vom Kern des genannten Strukturgehäuses (4) zur Innenseite hin einige Vorsprünge (11) vorstehen, die von Ausschnitten derselben definiert werden, zwischen denen der Betätigungshebel (6) in einer Gelenkbaugruppe erzeugt wird; der Rest definiert durch Schneiden und Absenken zur Innenseite hin an den Seiten des Strukturgehäuses (4) einige Vorsprünge (15), die einen Stopp für die Bewegung zur Rückseite des beweglichen Keils (5) hin bestimmen.

## Revendications

1. Poteau amélioré pour pieux de camion du type qui incorpore un dispositif d'ancrage qui comporte un logement structurel (4), par rapport auquel des bras pivotants (8) sont articulés, y compris un ensemble de guidage à l'intérieur du logement mentionné (4), une cale mobile (5), qui peut être déplacée au moyen d'un levier de commande (6), pour verrouiller et déverrouiller par rapport à un ancrage (17), dans lequel les bras pivotants (8) sont supportés d'une façon articulée, **caractérisé en ce que** le logement structurel (4) détermine à une extrémité une structure composée d'une boucle (9), par rapport à laquelle les bras pivotants (8) sont articulés à l'aide de charnières ; tandis que, sur les côtés, le logement mentionné (4) a des dispositions (10) définies vers l'extérieur, par rapport auxquelles un réglage de positionnement du dispositif est établi entre les bras pivotants (8) pour centrer la cale mobile (5) ; déterminant le logement (4) proprement dit à une zone extrême des côtés des boucles (14) vers l'intérieur, au moyen desquelles le guidage de la cale mobile (5) est établi ; tandis que du noyau du logement structurel mentionné (4) vers l'intérieur des ergots (11) sortent, ces derniers sont définis par des coupes de ces derniers, entre lesquels le levier de commande (6) est établi dans un ensemble articulé ; restant défini par la coupe et l'abaissement vers l'intérieur aux côtés du logement structurel (4) des ergots (15) qui déterminent un arrêt du déplacement vers l'arrière de la cale mobile (5).
